(19) Europäisches Patentamt / European Patent Office / Office européen des brevets

(11) **EP 4 160 483 A1**

(12) **EUROPEAN PATENT APPLICATION**

(43) Date of publication:
**05.04.2023 Bulletin 2023/14**

(21) Application number: **22198037.8**

(22) Date of filing: **27.09.2022**

(51) International Patent Classification (IPC):
*G06N 3/0464* (2023.01)  *G06N 3/09* (2023.01)
*G06F 18/2433* (2023.01)  *G06V 10/762* (2022.01)
*G06V 10/77* (2022.01)  *G06V 10/778* (2022.01)
*G06V 10/82* (2022.01)  *G06N 7/01* (2023.01)
*G06N 20/10* (2019.01)

(52) Cooperative Patent Classification (CPC):
**G06N 3/0464; G06F 18/2433; G06N 3/09;
G06N 7/01; G06N 20/10; G06V 10/763;
G06V 10/77; G06V 10/778; G06V 10/82;**
G06N 3/091; G06V 2201/03

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2021 US 202117449298**

(71) Applicant: **Siemens Healthcare GmbH
91052 Erlangen (DE)**

(72) Inventors:
• **GEORGESCU, Bogdan
Princeton, NJ 08540 (US)**
• **GIBSON, Eli
Plainsboro, NJ 08536 (US)**
• **GHESU, Florin-Cristian
Skillman, NJ 08558 (US)**
• **COMANICIU, Dorin
Princeton, NJ 08540 (US)**
• **JACOB, Athira Jane
Plainsboro, NJ 08536 (US)**
• **PASSERINI, Tiziano
Plainsboro, NJ 08536 (US)**
• **SHARMA, Puneet
Princeton Junction, NJ 08550 (US)**

(74) Representative: **Horn Kleimann Waitzhofer
Patentanwälte PartG mbB
Ganghoferstraße 29a
80339 München (DE)**

(54) **OUT-OF-DOMAIN DETECTION FOR IMPROVED AI PERFORMANCE**

(57) Systems and methods for determining input data is out-of-domain of an AI (artificial intelligence) based system are provided. Input data for inputting into an AI based system is received. An in-domain feature space of the AI based system and an out-of-domain feature space of the AI based system are modelled. The in-domain feature space corresponds to features of data that the AI based system is trained to classify. The out-of-domain feature space corresponds to features of data that the AI based system is not trained to classify. Probability distribution functions in the in-domain feature space and the out-of-domain feature space are generated for the input data and for the data that the AI based system is trained to classify. It is determined whether the input data is out-of-domain of the AI based system based on the probability distribution functions for the input data and for the data that the AI based system is trained to classify.

FIG 1

100

Receive input data for inputting into an AI based system — 102

Model an in-domain feature space of the AI based system and an out-of-domain feature space of the AI based system, the in-domain feature space corresponding to features of data that the AI based system is trained to classify and the out-of-domain feature space corresponding to features of data that the AI based system is not trained to classify — 104

Generate probability distribution functions, in the in-domain feature space and the out-of-domain feature space, for the input data and for the data that the AI based system is trained to classify — 106

Determine whether the input data is out-of-domain of the AI based system based on the probability distribution functions for the input data and for the data that the AI based system is trained to classify — 108

Output the determination of whether the input data is out-of-domain of the AI based system — 110

EP 4 160 483 A1

**Description**

TECHNICAL FIELD

The present invention relates generally to improved AI (artificial intelligence) performance, and in particular to out-of-domain detection for improved AI performance.

BACKGROUND

AI (artificial intelligence) based systems are often deployed to automate tasks that are typically performed manually by a user. For example, in medical imaging analysis, AI based systems may be deployed for detection, quantification, and clinical decision making based on medical images of a patient. Real world deployments of AI based systems increasingly encounter scenarios that were not presented in the training dataset, resulting in poor performance. Some examples of such scenarios are the analysis of medical images with varying degrees of quality or medical images in which objects of interest appear in different positions, orientations, scale, or in full or partial view. While improving and expanding the training dataset or adopting data augmentation techniques may help increase the robustness of AI based systems, AI based systems cannot practically be trained to address every scenario they may encounter. One solution is to have users manually review results of the AI based systems. However, users would have to review all results of the AI based systems, at the expense of full automation.

BRIEF SUMMARY OF THE INVENTION

In accordance with one or more embodiments, systems and methods for out-of-domain detection are provided to detect input data of AI based systems that is out of the distribution of the training data used to train the AI based systems. Input data for inputting into an AI based system is received. An in-domain feature space of the AI based system and an out-of-domain feature space of the AI based system are modelled. The in-domain feature space corresponds to features of data that the AI based system is trained to classify. The out-of-domain feature space corresponds to features of data that the AI based system is not trained to classify. Probability distribution functions in the in-domain feature space and the out-of-domain feature space are generated for the input data and for the data that the AI based system is trained to classify. It is determined whether the input data is out-of-domain of the AI based system based on the probability distribution functions for the input data and for the data that the AI based system is trained to classify.

In one embodiment, the in-domain feature space is computed based on one or more in-domain linear projection matrices of the AI based system. One or more orthogonal linear projection matrices for the out-of-domain feature space are computed based on the one or more in-domain linear projection matrices of the AI based system. The out-of-domain feature space is computed based on the one or more orthogonal linear projection matrices for the out-of-domain feature space. In one embodiment, the probability distribution functions are generated using a Gaussian process model or a combination of Gaussian probability distribution models fitted to available data.

In one embodiment, in response to determining that the input data is out-of-domain of the AI based system, a notification is transmitted to a user for reviewing a prediction generated by the AI based system from the input data. In another embodiment, in response to determining that the input data is out-of-domain of the AI based system, the input data is annotated and the AI based system is trained based on the annotated input data. In another embodiment, in response to determining that the input data is not out-of-domain of the AI based system, a prediction is generated from the input data by the AI based system.

In one embodiment, the receiving, the modelling, the generating, and the determining are performed by a module combined with the AI based system and the module combined with the AI based system generates a prediction from the input data and the determination of whether the input data is out-of-domain of the AI based system.

In one embodiment, one of a plurality of algorithms of the AI based system is selected based on the determining (e.g., by selecting the algorithm where the input data is in-domain). The AI based system may be for medical imaging analysis.

These and other advantages of the invention will be apparent to those of ordinary skill in the art by reference to the following detailed description and the accompanying drawings.

BRIEF DESCRIPTION OF THE DRAWINGS

Figure 1 shows a method for detecting out-of-domain input data, in accordance with one or more embodiments;

Figure 2 shows an exemplary model of feature spaces of an AI based system, in accordance with one or more embodiments;

Figure 3 shows images of probabilities of data being classified as being in-domain, in accordance with one or more embodiments;

Figure 4 shows a workflow for implementing an out-of-domain detector module separately from an AI based system, in accordance with one or more embodiments;

Figure 5 shows a workflow for implementing an out-of-domain detector module combined with an AI based system, in accordance with one or more embodiments;

Figure 6 shows a workflow for implementing an out-of-domain detector module that determines whether input data is out-of-domain of an AI based system based on both the input data and a prediction generated by the AI based system from the input data, in accordance with one or more embodiments;

Figure 7 shows a workflow for annotating input data for training an AI based system based on a determination of whether the input data is out-of-domain of the AI based system by an out-of-domain detector module, in accordance with one or more embodiments;

Figure 8 shows an exemplary artificial neural network that may be used to implement one or more embodiments;

Figure 9 shows a convolutional neural network that may be used to implement one or more embodiments; and

Figure 10 shows a high-level block diagram of a computer that may be used to implement one or more embodiments.

DETAILED DESCRIPTION

The present invention generally relates to methods and systems for out-of-domain detection for improved AI (artificial intelligence) performance. Embodiments of the present invention are described herein to give a visual understanding of such methods and systems. A digital image is often composed of digital representations of one or more objects (or shapes). The digital representation of an object is often described herein in terms of identifying and manipulating the objects. Such manipulations are virtual manipulations accomplished in the memory or other circuitry/hardware of a computer system. Accordingly, is to be understood that embodiments of the present invention may be performed within a computer system using data stored within the computer system.

Embodiments described herein provide for an out-of-domain detector for detecting whether input data, which is to be input into an AI based system, is within the distribution of the training data on which the AI based system is trained. The AI based system may have relatively poor performance when applied to the out-of-domain input data. Accordingly, the out-of-domain input data may be flagged to notify users that the AI based system is out-of-domain of the AI based system. In some embodiments, the out-of-domain input data may also be utilized to retrain the AI based system to increase robustness and improve performance.

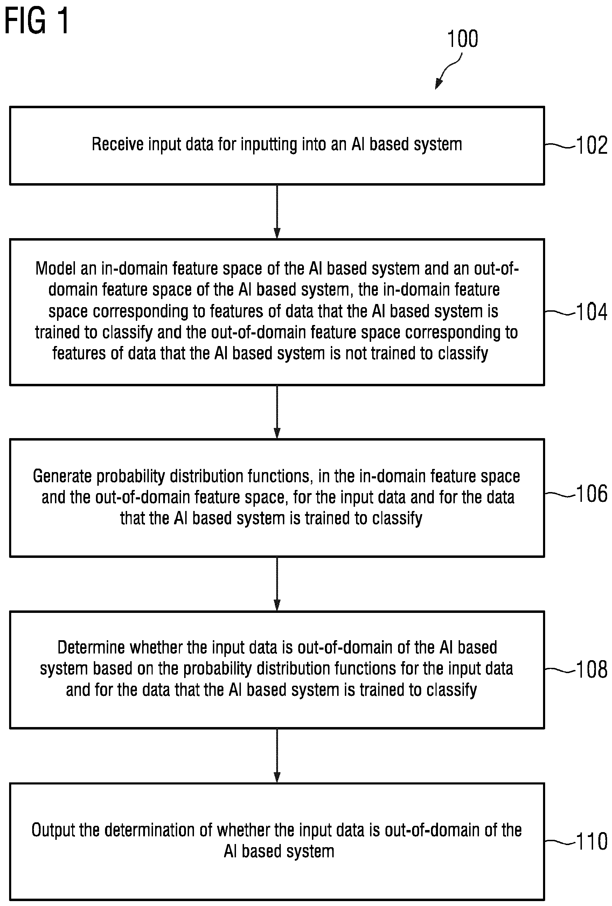

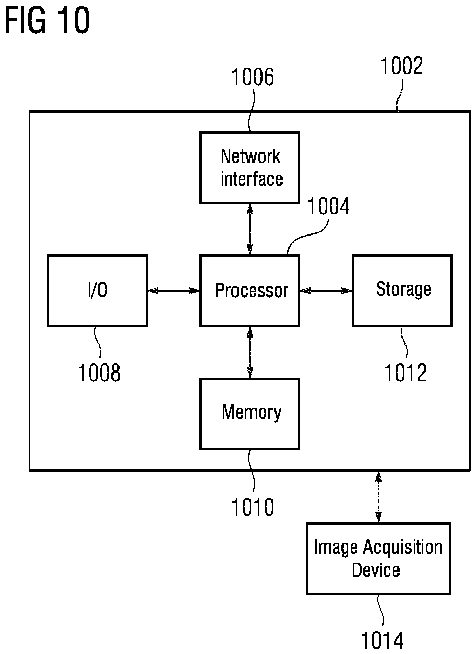

Figure 1 shows a method 100 for detecting out-of-domain input data, in accordance with one or more embodiments. The steps of method 100 may be performed by one or more suitable computing devices, such as, e.g., computer 1002 of Figure 10.

At step 102 of Figure 1, input data for inputting into an AI based system is received. In one example, the AI based system is for performing a medical imaging analysis task, such as, e.g., detection, quantification, and clinical decision making. The AI based system may be any suitable system for generating an output from the input data. In one embodiment, the AI based system comprises a machine learning based system (e.g., a neural network).

The input data may be any suitable data. In one embodiment, the input data comprises medical images of a patient. The medical images may be of any suitable modality, such as, e.g., CT (computed tomography), MRI (magnetic resonance imaging), ultrasound, x-ray, or any other medical imaging modality or combinations of medical imaging modalities. The medical images may be 2D (two dimensional) images and/or 3D (three dimensional) volumes, and may comprise a single input medical image or a plurality of input medical images. In another embodiment, the input data comprises clinical data of a patient, such as, e.g., medical history, demographics, laboratory results, etc.

The input data may be received by loading previously acquired data from a storage or memory of a computer system (e.g., an EMR (electronic medical record) system or a PACS (picture archiving and communication system)) or by receiving data that have been transmitted from a remote computer system. Where the input data comprises medical images, the medical images may be received directly from an image acquisition device as the medical images are acquired.

At step 104 of Figure 1, an in-domain feature space of the AI based system and an out-of-domain feature space of the AI based system is modelled. The in-domain feature space corresponds to features of data that the AI based system is trained to classify and the out-of-domain feature space corresponds to features of data that the AI based system is not trained to classify.

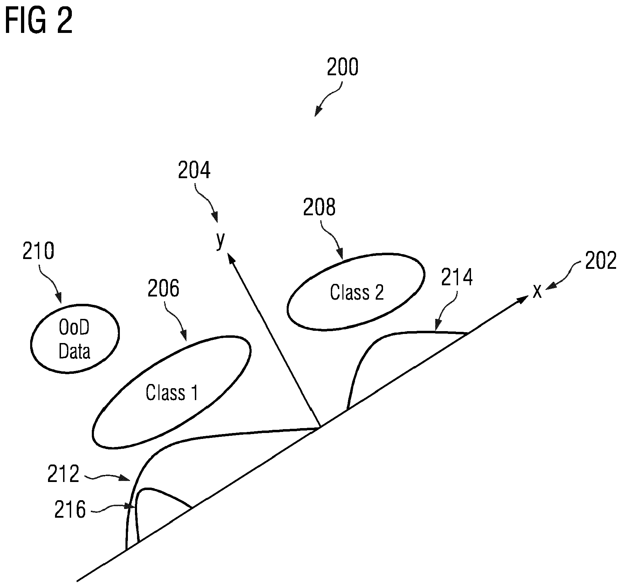

Figure 2 shows an exemplary model 200 of feature spaces of an AI based system, in accordance with one or more embodiments. Model 200 comprises in-domain feature space x 202 and out-of-domain feature space y 204. In-domain feature space x 202 corresponds to features of data that the AI based system is trained to classify. Accordingly, the AI based system uses in-domain feature space x 202 to discriminate between data of class 1 206 and data of class 2 208. Out-of-domain feature space y 204 corresponds to features of data (e.g., OoD (out of domain) data 210) that the AI based system is not trained to classify. Out-of-domain feature space y 204 is in the orthogonal space (relative to in-domain feature space x 202) or null space and is not visible to the AI based system. Out-of-domain data (e.g., OoD data 210) that projects over class 1 206 and/or class 2 208 cannot be distinguished between class 1 206 or class 2 208 by the AI based system.

In one embodiment, the AI based system comprises a machine learning based network (e.g., a neural network) comprising one or more projection layers (e.g., fully connected and/or convolutional layers) implemented with a linear projection matrix $A$. The values/weights of the projection matrix $A$ are typically learned off-line in the training phase such that the resulting projected feature values best represent the features relevant to the current task. Accordingly, in-domain feature space x 202 is modelled or computed as:

$$x = Az$$

where x is in-domain feature space 202, $A$ is a linear projection matrix of the AI based system for in-domain feature space x 202, and z is an input vector representing the original space. Out-of-domain feature space y 204 is then modelled or computed by finding the projection matrix $A_\perp$ as:

$$A_\perp = I - A^T (AA^T)^{\#} A$$

where $A_\perp$ is a linear projection matrix for out-of-domain feature space 204, $A^T$ is the transpose of projection matrix A and $(\cdot)^{\#}$ denotes the matrix pseudo-inverse. Out-of-domain feature space y 204 is modelled or computed as:

$$y = A_\perp z.$$

The machine learning based network is then configured to carry both in-domain feature space x 202 and out-of-domain feature space y 204. This can be achieved by constructing an additional network with the corresponding weights defined by the orthogonal projection matrix $A_\perp$. By modeling the data distributions both in the in-domain feature space x and orthogonal feature space y we can distinguish out-of-domain data that is "invisible" to the in-domain feature space.

Alternatively, the out-of-domain feature space y 204 of $A$ can be projected by taking the corresponding basis vectors from the singular value decomposition of $A$ (denoted by $V_N^T$):

$$A = USV^T = [U_R U_N] \begin{bmatrix} diag(s) & 0 \\ 0 & 0 \end{bmatrix} \begin{bmatrix} V_R^T \\ V_N^T \end{bmatrix}$$

where U and V are respectively the left and right singular vectors, S is the diagonal matrix of singular values, and the subscripts R and N denote range and null space respectively.

In one embodiment, if a plurality of matrices are used for in-domain feature space computation, the out-of-domain transformation can be composed of one or a plurality of projections as long as the projected features lie in the out-of-domain feature space y 204 (i.e., the null-space) of the in-domain features. This can be accomplished either by replacing only the last transformation with the orthogonal projection or by combining projected features from any of the orthogonal projections corresponding to the in-domain sequence of transformations.

At step 106 of Figure 1, probability distribution functions are generated in the in-domain feature space and the out-of-domain feature space for the input data and for the data that the AI based system is trained to classify. In one example, in model 200 of Figure 2, probability distribution function 216 is generated for OoD data 210, which may illustratively represent the input data, and probability distribution functions 212 and 214 are respectively generated for class 1 206 and class 2 208, which represent the data that the AI based system is trained to classify. Probability distribution functions 202, 214, and 216 are generated in both in-domain feature space x 202 and out-of-domain feature space y 204.

The probability distribution functions may be generated using any suitable approach after the neural network training phase by modeling the features in the training data. Models of the data distribution can be a mixture or combination of Gaussian probability distribution models, non-parametric density estimates, or Gaussian processes. The model parameters are fit to the in/out of domain features computed by the modified neural network. In one embodiment, the probability distribution functions are generated using a Gaussian process model with or without inducing points in the feature space.

At step 108 of Figure 1, it is determined whether the input data is out-of-domain of the AI based system based on the probability distribution functions for the input data and for the data that the AI based system is trained to classify. The input data being out-of-domain of the AI based system indicates that the input data corresponds to data that the AI based system is not trained to classify. The input data being not out-of-domain (i.e., in-domain) indicates that the input data corresponds to data that the AI based system is trained to classify.

A probability or score of the input data belonging to the in-domain distribution is given by the probability of the projected features according to the fitted in-domain probability distribution function modelled at step 106 of Figure 1. A high probability indicates that the input data is most similar to the training (in-domain) distribution while a low probability indicates that the input data is not similar to the training distribution. The determination of whether the input data is out-of-domain of the AI based system may be represented in any suitable format. For example, the determination of whether the input data is out-of-domain of the AI based system is represented as an out-of-domain score. A classification (e.g., yes, no, or uncertain) may be determined by comparing the out-of-domain score to one or more thresholds.

At step 110 of Figure 1, the determination of whether the input data is out-of-domain of the AI based system is output. For example, the determination of whether the input data is out-of-domain of the AI based system can be output by displaying the determination of whether the input data is out-of-domain of the AI based system on a display device of a computer system, storing the determination of whether the input data is out-of-domain of the AI based system on a memory or storage of a computer system, or by transmitting the determination of whether the input data is out-of-domain of the AI based system to a remote computer system.

The AI based system may have relatively poor performance for out-of-domain input data. Accordingly, in one embodiment, in response to determining that the input data is out-of-domain of the AI based system, a notification is transmitting to a user for manually reviewing a prediction generated by the AI based system from the input data.

In one embodiment, method 100 may be combined with spectral normalization or other regularization techniques when the AI based system is initially trained. In one embodiment, supervised training may be applied to find discriminative feature spaces on which additional out-of-domain detector models may be built.

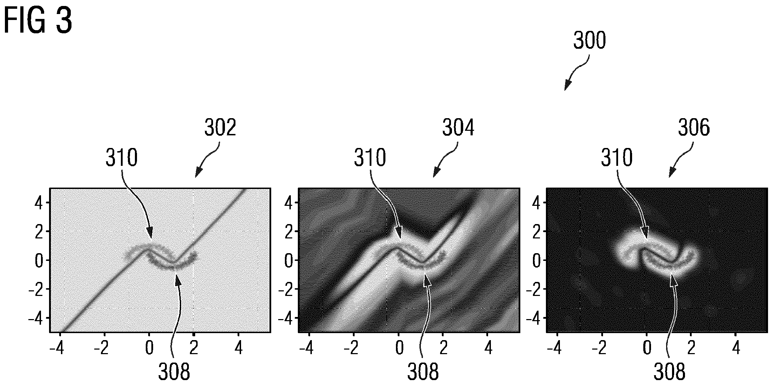

Figure 3 shows images 300 of probabilities of data being classified as being in-domain, in accordance with one or more embodiments. In images 300, regions 308 represent low probabilities of being classified as being in-domain and regions 310 represent high probabilities of being classified as being in-domain. Image 302 illustrates the probability of the original classifier in the final classifier output. While the original classifier distinguishes between both classes well, it cannot separate out-of-domain input data well. Image 304 illustrates the probability of a Gaussian process trained in the in-domain feature space of the second linear layer. Image 306 illustrates the probability of a Gaussian process trained in the in-domain feature space and the out-of-domain feature space of the second linear classifier. Image 306 shows much better separate between out-of-domain data and in-domain data than image 304.

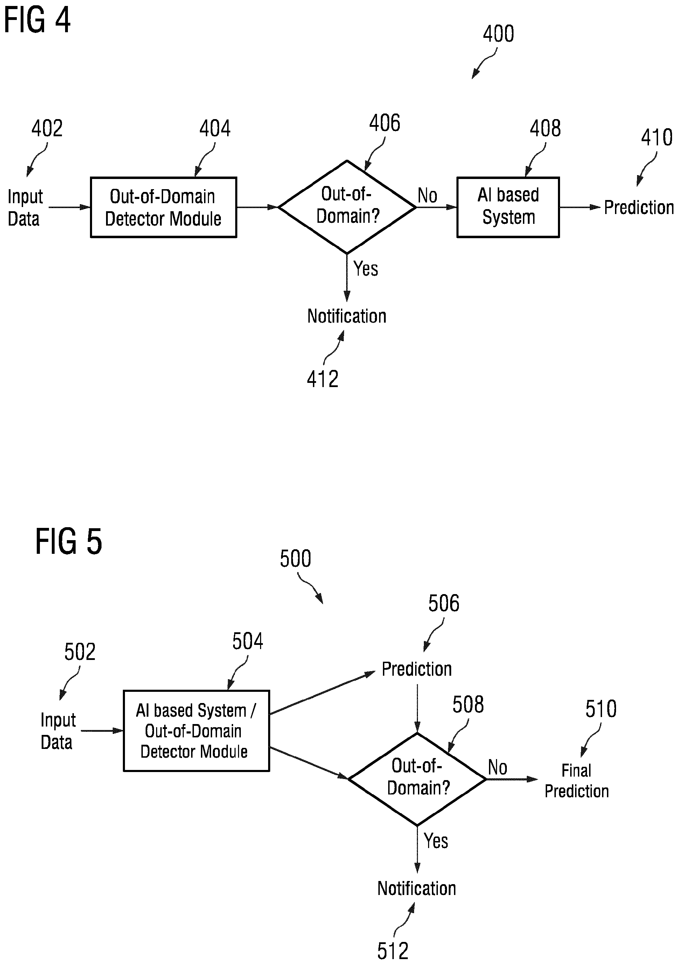

In one embodiment, an out-of-domain detector module may be implemented in accordance with method 100 of Figure 1 (or any other suitable approach) and employed in various configurations with respect to the AI based system, as described below with respect to Figures 4-6.

Figure 4 shows a workflow 400 for implementing an out-of-domain detector module separately from an AI based system, in accordance with one or more embodiments. In workflow 400, input data 402 is input into out-of-domain detector module 404. In one example, input data 402 is the input data received at step 102 of Figure 1. Out-of-domain detector module 404 determines whether input data 402 is out-of-domain of AI based system 408. In one embodiment, out-of-domain detector module 404 determines whether input data 402 is out-of-domain of AI based system 408 according to method 100 of Figure 1. In another embodiment, out-of-domain detector module 404 determines whether input data 402 is out-of-domain of AI based system 408 by, for example, normalizing flows to explicitly model the distribution of the training data used to train AI based system 408 and checking a priori whether the input data is in-domain or out-of-domain of AI based system 408. Out-of-domain detector module 404 may determine whether input data 402 is out-of-domain of AI based system 408 using any other suitable approach. If input data 402 is not out-of-domain (i.e., input data 402 is in-domain) at decision block 406, input data 402 is input into AI based system 408 and AI based system 408 generates prediction 410 as output. If input data 402 is out-of-domain at decision block 406, a notification 412 is generated to notify a user that input data 402 is out-of-domain. In response, the user may approve the input of input data 402 into AI based system 408 and manually review prediction 410 or the user may have input data 402 annotated and retrain AI based system 408 with the annotated input data.

Figure 5 shows a workflow 500 for implementing an out-of-domain detector module combined with an AI based system, in accordance with one or more embodiments. In workflow 500, input data 502 is input into AI based system/out-of-domain detector module 504. In one example, input data 502 is the input data received at step 102 of Figure 1. AI based system/out-of-domain detector module 504 is a combination of an AI based system and an out-of-domain detector module into a single module. The out-of-domain detector module implemented by AI based system/out-of-domain detector module 504 determines whether input data 502 is out-of-domain of the AI based system implemented by AI based system/out-of-domain detector module 504. In one embodiment, the out-of-domain detector module determines whether input data 502 is out-of-domain of the AI based system according to method 100 of Figure 1. In another embodiment, the out-of-domain detector module determines whether input data 502 is out-of-domain of the AI based system based on energy or entropy-based methods on the output softmax layer of a deep learning network implemented by the AI based system. Higher energy levels imply that input data 502 is out-of-domain of the AI based system. The out-of-domain detector module may determine whether input data 502 is out-of-domain of the AI based system using any other suitable approach. AI based system/out-of-domain detector module 504 generates as output both prediction 506 and a determination of whether input data 502 is out-of-domain of the AI based system. If input data 502 is not out-of-domain (i.e., input data 502 is in-domain) at decision block 508, prediction 506 is output as final prediction 510. If input data 502 is out-of-domain at decision block 508, a notification 512 is generated to notify a user that input data 502 is out-of-domain. In response, the user may manually review prediction 506 or the user may have input data 502 annotated and retrain the AI based system with the annotated input data.

In one embodiment, the out-of-domain detector module of AI based system/out-of-domain detector module 504 determines whether input data 502 is out-of-domain of the AI based system by training an ensemble of networks with varying architectures and stopping at different epochs. The networks are evaluated on input data 502 to assess a variance. The determination for the paired input data 502/prediction 506 may be a function of the variance. Cases for which the determination is relatively high (e.g., based on a comparison of an out-of-domain score with one or more thresholds) can be recovered as having relatively low uncertainty and classified as not being out-of-domain.

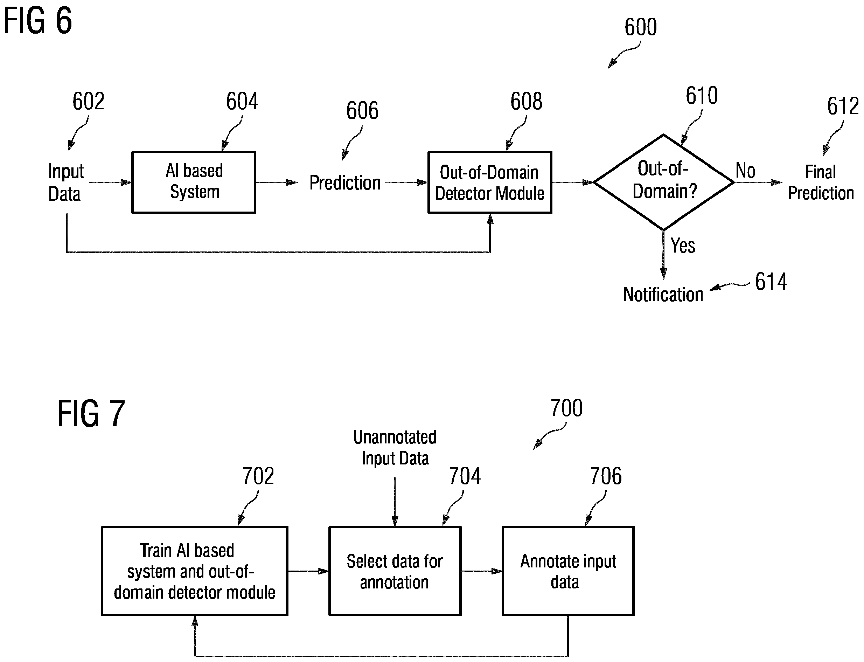

Figure 6 shows a workflow 600 for implementing an out-of-domain detector module that determines whether input data is out-of-domain of an AI based system based on both the input data and a prediction generated by the AI based system from the input data, in accordance with one or more embodiments. In workflow 600, input data 602 is input into AI based system 604, which generates prediction 606 as output. In one example, input data 602 is the input data received at step 102 of Figure 1.

Out-of-domain detector module 608 receives as input both input data 602 and prediction 606. Out-of-domain detector module 608 generates a joint determination of whether input data 602 is out-of-domain (e.g., in the form of an out-of-domain score) for input data 602 and for the paired input data 602/prediction 606. There may be out-of-domain input data that AI based system 604 may still generalize well. Accordingly, by generating a determination for the input data 602 and a determination for the paired input data 602/prediction 606, out-of-domain detector module 608 measures how out-of-domain prediction 606 is, providing a filter for what a user may have to review. In one embodiment, out-of-domain detector module 608 determines whether input data 602 is out-of-domain of AI based system 604 according to method 100 of Figure 1. Out-of-domain detector module 608 may determine whether input data 602 is out-of-domain of AI based system 604 using any other suitable approach.

If input data 602 is not out-of-domain (i.e., input data 602 is in-domain) at decision block 610, prediction 606 is output as final prediction 612. If input data 602 is out-of-domain at decision block 610, a notification 614 is generated to notify a user that input data 602 is out-of-domain. In response, the user may manually review prediction 606, or the user may have input data 602 annotated and retrain the AI based system with the annotated input data.

In one embodiment, the out-of-domain score (e.g., from out-of-domain detector module 404 of Figure 4, AI based system/out-of-domain detector module 504 of Figure 5, or out-of-domain detector module 608 of Figure 6) can be used to derive confidence intervals for measurements extracted from the prediction. For example, for a system that segments the left ventricle from 2D echocardiographs, an out-of-domain score may be directly correlated with variance in the measurement of ejection fraction. One way to do so would be to calculate the variance from the multiple predictions that were used to calculate the out-of-domain score. Alternatively, the correlation between the out-of-domain score and variance in measurement can also be learned during a training stage.

Figure 7 shows a workflow 700 for annotating input data for training an AI based system based on a determination of whether the input data is out-of-domain of the AI based system by an out-of-domain detector module, in accordance with one or more embodiments. Out-of-domain input data are indicators of gaps in performance of the AI based system in real life scenarios. The determination of whether the input data is out-of-domain of the AI based system enables the input data to be flagged and used for improving performance of the AI based system.

In workflow 700, an AI based system and an out-of-domain detector module is trained at step 702. In one embodiment, the out-of-domain detector module may be implemented according to method 100 of Figure 1. At step 704, unannotated input data is input into the AI based system and/or the out-of-domain detector module and out-of-domain unannotated input data is selected for annotation (e.g., by comparing an out-of-domain score with one or more thresholds). At step 706, the unannotated input data is annotated. The annotated input data may be fed back to train the AI based system and out-of-domain detector module at step 702.

In one embodiment, the out-of-domain detector module may be continuously run together with the AI based system on the clinical side to collect out-of-domain input data. The out-of-domain input data can be used to identify modes of failure (e.g., pediatric echocardiography vs. adult echo). A batch of out-of-domain input data over time can be used to directly train the AI based system. The out-of-domain input data may be used for online learning on-site, as and when the out-of-domain input data is received and detected. The out-of-domain detector module may be useful in situations involving federated learning, where data privacy regulations prevent thorough analyses of local site data by external entities. Out-of-domain input data can be used to automatically select low performing input data and train the AI based system.

In one embodiment, the out-of-domain detector module may be used to select a most appropriate algorithm of the AI based system from a plurality of AI algorithms to run on given input data. For example, a left ventricular ejection fraction calculation algorithm may be trained on normal and pathological patients. However, it is not trivial to detect if an incoming 2D echo cases is normal or not. An algorithm trained on normal patients may be applied first, and if an out-of-domain detector module identified the input data as being out-of-domain, an algorithm trained on pathologic patients may then be applied.

Embodiments described herein are described with respect to the claimed systems as well as with respect to the claimed methods. Features, advantages or alternative embodiments herein can be assigned to the other claimed objects and vice versa. In other words, claims for the systems can be improved with features described or claimed in the context of the methods. In this case, the functional features of the method are embodied by objective units of the providing system.

Furthermore, certain embodiments described herein are described with respect to methods and systems utilizing trained machine learning based networks (or models), as well as with respect to methods and systems for training machine learning based networks. Features, advantages or alternative embodiments herein can be assigned to the other claimed objects and vice versa. In other words, claims for methods and systems for training a machine learning based network can be improved with features described or claimed in context of the methods and systems for utilizing a trained machine learning based network, and vice versa.

In particular, the trained machine learning based networks applied in embodiments described herein can be adapted by the methods and systems for training the machine learning based networks. Furthermore, the input data of the trained machine learning based network can comprise advantageous features and embodiments of the training input data, and vice versa. Furthermore, the output data of the trained machine learning based network can comprise advantageous features and embodiments of the output training data, and vice versa.

In general, a trained machine learning based network mimics cognitive functions that humans associate with other human minds. In particular, by training based on training data, the trained machine learning based network is able to adapt to new circumstances and to detect and extrapolate patterns.

In general, parameters of a machine learning based network can be adapted by means of training. In particular, supervised training, semi-supervised training, unsupervised training, reinforcement learning and/or active learning can be used. Furthermore, representation learning (an alternative term is "feature learning") can be used. In particular, the parameters of the trained machine learning based network can be adapted iteratively by several steps of training.

In particular, a trained machine learning based network can comprise a neural network, a support vector machine, a decision tree, and/or a Bayesian network, and/or the trained machine learning based network can be based on k-means clustering, Q-learning, genetic algorithms, and/or association rules. In particular, a neural network can be a deep neural network, a convolutional neural network, or a convolutional deep neural network. Furthermore, a neural network can be an adversarial network, a deep adversarial network and/or a generative adversarial network.

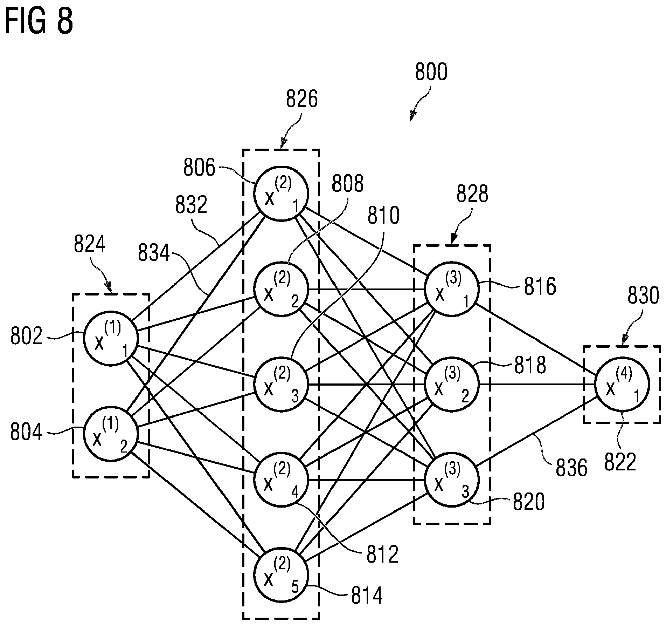

Figure 8 shows an embodiment of an artificial neural network 800, in accordance with one or more embodiments. Alternative terms for "artificial neural network" are "neural network", "artificial neural net" or "neural net". Machine learning networks described herein, such as, e.g., the machine learning based networks which may be used to implement the AI based system of Figure 1, the out-of-domain detector module 404 and the AI based system 408 of Figure 4, the AI based system/out-of-domain detector module 504 of Figure 5, the AI based system 604 and the out-of-domain detector module 608 of Figure 6, and the AI based system and out-of-domain detector module of Figure 7, may be implemented using artificial neural network 800.

The artificial neural network 800 comprises nodes 802-822 and edges 832, 834, ..., 836, wherein each edge 832, 834, ..., 836 is a directed connection from a first node 802-822 to a second node 802-822. In general, the first node 802-822 and the second node 802-822 are different nodes 802-822, it is also possible that the first node 802-822 and the second node 802-822 are identical. For example, in Figure 8, the edge 832 is a directed connection from the node 802 to the node 806, and the edge 834 is a directed connection from the node 804 to the node 806. An edge 832, 834, ..., 836 from a first node 802-822 to a second node 802-822 is also denoted as "ingoing edge" for the second node 802-822 and as "outgoing edge" for the first node 802-822.

In this embodiment, the nodes 802-822 of the artificial neural network 800 can be arranged in layers 824-830, wherein the layers can comprise an intrinsic order introduced by the edges 832, 834, ..., 836 between the nodes 802-822. In particular, edges 832, 834, ..., 836 can exist only between neighboring layers of nodes. In the embodiment shown in Figure 8, there is an input layer 824 comprising only nodes 802 and 804 without an incoming edge, an output layer 830 comprising only node 822 without outgoing edges, and hidden layers 826, 828 in-between the input layer 824 and the output layer 830. In general, the number of hidden layers 826, 828 can be chosen arbitrarily. The number of nodes 802 and 804 within the input layer 824 usually relates to the number of input values of the neural network 800, and the number of nodes 822 within the output layer 830 usually relates to the number of output values of the neural network 800.

In particular, a (real) number can be assigned as a value to every node 802-822 of the neural network 800. Here, $x^{(n)}_i$ denotes the value of the i-th node 802-822 of the n-th layer 824-830. The values of the nodes 802-822 of the input layer 824 are equivalent to the input values of the neural network 800, the value of the node 822 of the output layer 830 is equivalent to the output value of the neural network 800. Furthermore, each edge 832, 834, ..., 836 can comprise a weight being a real number, in particular, the weight is a real number within the interval [-1, 1] or within the interval [0, 1]. Here, $w^{(m,n)}_{i,j}$ denotes the weight of the edge between the i-th node 802-822 of the m-th layer 824-830 and the j-th node 802-822 of the n-th layer 824-830. Furthermore, the abbreviation $w^{(n)}_{i,j}$ is defined for the weight $w^{(n,n+1)}_{i,j}$.

In particular, to calculate the output values of the neural network 800, the input values are propagated through the neural network. In particular, the values of the nodes 802-822 of the (n+1)-th layer 824-830 can be calculated based on the values of the nodes 802-822 of the n-th layer 824-830 by

$$x_j^{(n+1)} = f\left(\sum_i x_i^{(n)} \cdot w_{i,j}^{(n)}\right).$$

Herein, the function f is a transfer function (another term is "activation function"). Known transfer functions are step functions, sigmoid function (e.g. the logistic function, the generalized logistic function, the hyperbolic tangent, the Arctangent function, the error function, the smoothstep function) or rectifier functions. The transfer function is mainly used for normalization purposes.

In particular, the values are propagated layer-wise through the neural network, wherein values of the input layer 824 are given by the input of the neural network 800, wherein values of the first hidden layer 826 can be calculated based on the values of the input layer 824 of the neural network, wherein values of the second hidden layer 828 can be calculated based in the values of the first hidden layer 826, etc.

In order to set the values $w^{(m,n)}_{i,j}$ for the edges, the neural network 800 has to be trained using training data. In particular, training data comprises training input data and training output data (denoted as $t_i$). For a training step, the neural network 800 is applied to the training input data to generate calculated output data. In particular, the training data and the calculated output data comprise a number of values, said number being equal with the number of nodes of the output layer.

In particular, a comparison between the calculated output data and the training data is used to recursively adapt the weights within the neural network 800 (backpropagation algorithm). In particular, the weights are changed according to

$$w'^{(n)}_{i,j} = w^{(n)}_{i,j} - \gamma \cdot \delta_j^{(n)} \cdot x_i^{(n)}$$

wherein $\gamma$ is a learning rate, and the numbers $\delta^{(n)}_j$ can be recursively calculated as

$$\delta_j^{(n)} = \left(\sum_k \delta_k^{(n+1)} \cdot w_{j,k}^{(n+1)}\right) \cdot f\left(\sum_i x_i^{(n)} \cdot w_{i,j}^{(n)}\right)$$

based on $\delta^{(n+1)}_j$, if the (n+1)-th layer is not the output layer, and

$$\delta_j^{(n)} = \left(x_k^{(n+1)} \cdot t_j^{(n+1)}\right) \cdot f\left(\sum_i x_i^{(n)} \cdot w_{i,j}^{(n)}\right)$$

if the (n+1)-th layer is the output layer 830, wherein f is the first derivative of the activation function, and $y^{(n+1)}_j$ is the comparison training value for the j-th node of the output layer 830.

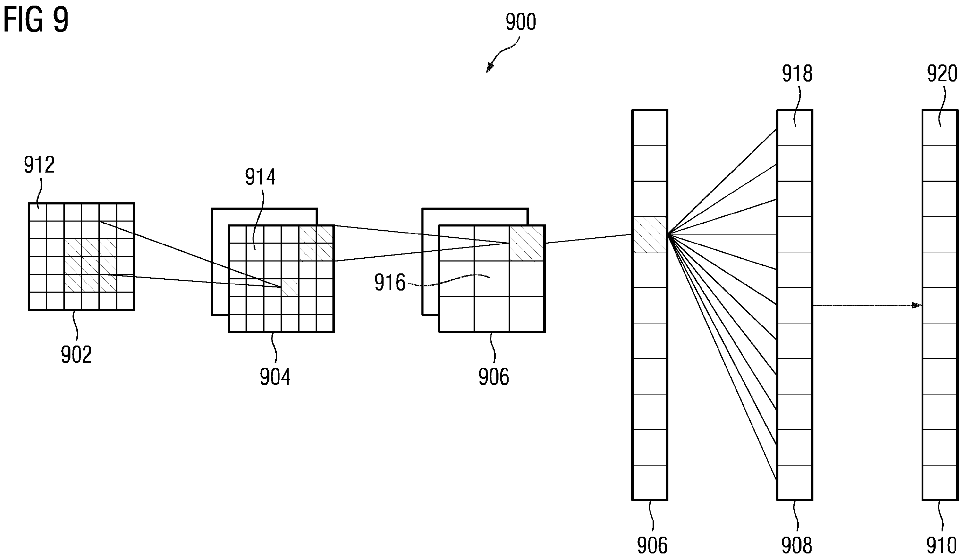

Figure 9 shows a convolutional neural network 900, in accordance with one or more embodiments. Machine learning networks described herein, such as, e.g., the machine learning based networks which may be used to implement the AI based system of Figure 1, the out-of-domain detector module 404 and the AI based system 408 of Figure 4, the AI based system/out-of-domain detector module 504 of Figure 5, the AI based system 604 and the out-of-domain detector module 608 of Figure 6, and the AI based system and out-of-domain detector module of Figure 7, may be implemented using convolutional neural network 900.

In the embodiment shown in Figure 9, the convolutional neural network comprises 900 an input layer 902, a convolutional layer 904, a pooling layer 906, a fully connected layer 908, and an output layer 910. Alternatively, the convolutional neural network 900 can comprise several convolutional layers 904, several pooling layers 906, and several fully connected layers 908, as well as other types of layers. The order of the layers can be chosen arbitrarily, usually fully connected layers 908 are used as the last layers before the output layer 910.

In particular, within a convolutional neural network 900, the nodes 912-920 of one layer 902-910 can be considered to be arranged as a d-dimensional matrix or as a d-dimensional image. In particular, in the two-dimensional case the value of the node 912-920 indexed with i and j in the n-th layer 902-910 can be denoted as $x^{(n)}_{[i,j]}$. However, the arrangement of the nodes 912-920 of one layer 902-910 does not have an effect on the calculations executed within the convolutional neural network 900 as such, since these are given solely by the structure and the weights of the edges.

In particular, a convolutional layer 904 is characterized by the structure and the weights of the incoming edges forming a convolution operation based on a certain number of kernels. In particular, the structure and the weights of the incoming edges are chosen such that the values $x^{(n)}_k$ of the nodes 914 of the convolutional layer 904 are calculated as a convolution $x^{(n)}_k = K_k * x^{(n-1)}$ based on the values $x^{(n-1)}$ of the nodes 912 of the preceding layer 902, where the convolution * is defined in the two-dimensional case as

$$x^{(n)}_k[i,j] = \left(K_k * x^{(n-1)}\right)[i,j] = \sum_{i'}\sum_{j'} K_k[i',j'] \cdot x^{(n-1)}[i-i',\, j-j'].$$

Here the k-th kernel $K_k$ is a d-dimensional matrix (in this embodiment a two-dimensional matrix), which is usually small compared to the number of nodes 912-918 (e.g. a 3x3 matrix, or a 5x5 matrix). In particular, this implies that the weights of the incoming edges are not independent, but chosen such that they produce said convolution equation. In particular, for a kernel being a 3x3 matrix, there are only 9 independent weights (each entry of the kernel matrix corresponding to one independent weight), irrespectively of the number of nodes 912-920 in the respective layer 902-910. In particular, for a convolutional layer 904, the number of nodes 914 in the convolutional layer is equivalent to the number of nodes 912 in the preceding layer 902 multiplied with the number of kernels.

If the nodes 912 of the preceding layer 902 are arranged as a d-dimensional matrix, using a plurality of kernels can be interpreted as adding a further dimension (denoted as "depth" dimension), so that the nodes 914 of the convolutional layer 904 are arranged as a (d+1)-dimensional matrix. If the nodes 912 of the preceding layer 902 are already arranged as a (d+1)-dimensional matrix comprising a depth dimension, using a plurality of kernels can be interpreted as expanding along the depth dimension, so that the nodes 914 of the convolutional layer 904 are arranged also as a (d+1)-dimensional matrix, wherein the size of the (d+1)-dimensional matrix with respect to the depth dimension is by a factor of the number of kernels larger than in the preceding layer 902.

The advantage of using convolutional layers 904 is that spatially local correlation of the input data can exploited by enforcing a local connectivity pattern between nodes of adjacent layers, in particular by each node being connected to only a small region of the nodes of the preceding layer.

In embodiment shown in Figure 9, the input layer 902 comprises 36 nodes 912, arranged as a two-dimensional 6x6 matrix. The convolutional layer 904 comprises 72 nodes 914, arranged as two two-dimensional 6x6 matrices, each of the two matrices being the result of a convolution of the values of the input layer with a kernel. Equivalently, the nodes 914 of the convolutional layer 904 can be interpreted as arranges as a three-dimensional 6x6x2 matrix, wherein the last dimension is the depth dimension.

A pooling layer 906 can be characterized by the structure and the weights of the incoming edges and the activation function of its nodes 916 forming a pooling operation based on a non-linear pooling function f. For example, in the two dimensional case the values $x^{(n)}$ of the nodes 916 of the pooling layer 906 can be calculated based on the values $x^{(n-1)}$ of the nodes 914 of the preceding layer 904 as

$$x^{(n)}[i,j] = f(x^{(n-1)}[id_1, jd_2], \ldots, x^{(n-1)}[id_1+d_1-1, jd_2+d_2-1])$$

In other words, by using a pooling layer 906, the number of nodes 914, 916 can be reduced, by replacing a number d1·d2 of neighboring nodes 914 in the preceding layer 904 with a single node 916 being calculated as a function of the values of said number of neighboring nodes in the pooling layer. In particular, the pooling function f can be the max-function, the average or the L2-Norm. In particular, for a pooling layer 906 the weights of the incoming edges are fixed and are not modified by training.

The advantage of using a pooling layer 906 is that the number of nodes 914, 916 and the number of parameters is reduced. This leads to the amount of computation in the network being reduced and to a control of overfitting.

In the embodiment shown in Figure 9, the pooling layer 906 is a max-pooling, replacing four neighboring nodes with only one node, the value being the maximum of the values of the four neighboring nodes. The max-pooling is applied to each d-dimensional matrix of the previous layer; in this embodiment, the max-pooling is applied to each of the two two-dimensional matrices, reducing the number of nodes from 72 to 18.

A fully-connected layer 908 can be characterized by the fact that a majority, in particular, all edges between nodes 916 of the previous layer 906 and the nodes 918 of the fully-connected layer 908 are present, and wherein the weight of each of the edges can be adjusted individually.

In this embodiment, the nodes 916 of the preceding layer 906 of the fully-connected layer 908 are displayed both as two-dimensional matrices, and additionally as non-related nodes (indicated as a line of nodes, wherein the number of nodes was reduced for a better presentability). In this embodiment, the number of nodes 918 in the fully connected layer 908 is equal to the number of nodes 916 in the preceding layer 906. Alternatively, the number of nodes 916, 918 can differ.

Furthermore, in this embodiment, the values of the nodes 920 of the output layer 910 are determined by applying the Softmax function onto the values of the nodes 918 of the preceding layer 908. By applying the Softmax function, the sum the values of all nodes 920 of the output layer 910 is 1, and all values of all nodes 920 of the output layer are real numbers between 0 and 1.

A convolutional neural network 900 can also comprise a ReLU (rectified linear units) layer or activation layers with non-linear transfer functions. In particular, the number of nodes and the structure of the nodes contained in a ReLU layer is equivalent to the number of nodes and the structure of the nodes contained in the preceding layer. In particular, the value of each node in the ReLU layer is calculated by applying a rectifying function to the value of the corresponding node of the preceding layer.

The input and output of different convolutional neural network blocks can be wired using summation (residual / dense neural networks), element-wise multiplication (attention) or other differentiable operators. Therefore, the convolutional neural network architecture can be nested rather than being sequential if the whole pipeline is differentiable.

In particular, convolutional neural networks 900 can be trained based on the backpropagation algorithm. For preventing overfitting, methods of regularization can be used, e.g. dropout of nodes 912-920, stochastic pooling, use of artificial data, weight decay based on the L1 or the L2 norm, or max norm constraints. Different loss functions can be combined for training the same neural network to reflect the joint training objectives. A subset of the neural network parameters can be excluded from optimization to retain the weights pretrained on another datasets.

Systems, apparatuses, and methods described herein may be implemented using digital circuitry, or using one or more computers using well-known computer processors, memory units, storage devices, computer software, and other components. Typically, a computer includes a processor for executing instructions and one or more memories for storing instructions and data. A computer may also include, or be coupled to, one or more mass storage devices, such as one or more magnetic disks, internal hard disks and removable disks, magneto-optical disks, optical disks, etc.

Systems, apparatus, and methods described herein may be implemented using computers operating in a client-server relationship. Typically, in such a system, the client computers are located remotely from the server computer and interact via a network. The client-server relationship may be defined and controlled by computer programs running on the respective client and server computers.

Systems, apparatus, and methods described herein may be implemented within a network-based cloud computing system. In such a network-based cloud computing system, a server or another processor that is connected to a network communicates with one or more client computers via a network. A client computer may communicate with the server via a network browser application residing and operating on the client computer, for example. A client computer may store data on the server and access the data via the network. A client computer may transmit requests for data, or requests for online services, to the server via the network. The server may perform requested services and provide data to the client computer(s). The server may also transmit data adapted to cause a client computer to perform a specified function, e.g., to perform a calculation, to display specified data on a screen, etc. For example, the server may transmit a request adapted to cause a client computer to perform one or more of the steps or functions of the methods and workflows described herein, including one or more of the steps or functions of Figures 1 or 4-7. Certain steps or functions of the methods and workflows described herein, including one or more of the steps or functions of Figures 1 or 4-7, may be performed by a server or by another processor in a network-based cloud-computing system. Certain steps or functions of the methods and workflows described herein, including one or more of the steps of Figures 1 or 4-7, may be performed by a client computer in a network-based cloud computing system. The steps or functions of the methods and workflows described herein, including one or more of the steps of Figures 1 or 4-7, may be performed by a server and/or by a client computer in a network-based cloud computing system, in any combination.

Systems, apparatus, and methods described herein may be implemented using a computer program product tangibly embodied in an information carrier, e.g., in a non-transitory machine-readable storage device, for execution by a programmable processor; and the method and workflow steps described herein, including one or more of the steps or functions of Figures 1 or 4-7, may be implemented using one or more computer programs that are executable by such a processor. A computer program is a set of computer program instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

A high-level block diagram of an example computer 1002 that may be used to implement systems, apparatus, and methods described herein is depicted in Figure 10. Computer 1002 includes a processor 1004 operatively coupled to a data storage device 1012 and a memory 1010. Processor 1004 controls the overall operation of computer 1002 by executing computer program instructions that define such operations. The computer program instructions may be stored in data storage device 1012, or other computer readable medium, and loaded into memory 1010 when execution of the computer program instructions is desired. Thus, the method and workflow steps or functions of Figures 1 or 4-7 can be defined by the computer program instructions stored in memory 1010 and/or data storage device 1012 and controlled by processor 1004 executing the computer program instructions. For example, the computer program instructions can be implemented as computer executable code programmed by one skilled in the art to perform the method and workflow steps or functions of Figures 1 or 4-7. Accordingly, by executing the computer program instructions, the processor 1004 executes the method and workflow steps or functions of Figures 1 or 4-7. Computer 1002 may also include one or more network interfaces 1006 for communicating with other devices via a network. Computer 1002 may also include one or more input/output devices 1008 that enable user interaction with computer 1002 (e.g., display, keyboard, mouse, speakers, buttons, etc.).

Processor 1004 may include both general and special purpose microprocessors, and may be the sole processor or one of multiple processors of computer 1002. Processor 1004 may include one or more central processing units (CPUs), for example. Processor 1004, data storage device 1012, and/or memory 1010 may include, be supplemented by, or incorporated in, one or more application-specific integrated circuits (ASICs) and/or one or more field programmable gate arrays (FPGAs).

Data storage device 1012 and memory 1010 each include a tangible non-transitory computer readable storage medium. Data storage device 1012, and memory 1010, may each include high-speed random access memory, such as dynamic random access memory (DRAM), static random access memory (SRAM), double data rate synchronous dynamic random access memory (DDR RAM), or other random access solid state memory devices, and may include non-volatile memory, such as one or more magnetic disk storage devices such as internal hard disks and removable disks, magneto-optical disk storage devices, optical disk storage devices, flash memory devices, semiconductor memory devices, such as erasable programmable read-only memory (EPROM), electrically erasable programmable read-only memory (EEPROM), compact disc read-only memory (CD-ROM), digital versatile disc read-only memory (DVD-ROM) disks, or other non-volatile solid state storage devices.

Input/output devices 1008 may include peripherals, such as a printer, scanner, display screen, etc. For example, input/output devices 1008 may include a display device such as a cathode ray tube (CRT) or liquid crystal display (LCD) monitor for displaying information to the user, a keyboard, and a pointing device such as a mouse or a trackball by which the user can provide input to computer 1002.

An image acquisition device 1014 can be connected to the computer 1002 to input image data (e.g., medical images) to the computer 1002. It is possible to implement the image acquisition device 1014 and the computer 1002 as one device. It is also possible that the image acquisition device 1014 and the computer 1002 communicate wirelessly through a network. In a possible embodiment, the computer 1002 can be located remotely with respect to the image acquisition device 1014.

Any or all of the systems and apparatus discussed herein may be implemented using one or more computers such as computer 1002.

One skilled in the art will recognize that an implementation of an actual computer or computer system may have other structures and may contain other components as well, and that Figure 10 is a high level representation of some of the components of such a computer for illustrative purposes.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. Those skilled in the art could implement various other feature combinations without departing from the scope and spirit of the invention.

**Claims**

1. A method comprising:

   receiving (102) input data for inputting into an AI (artificial intelligence) based system;
   modelling (104) an in-domain feature space of the AI based system and an out-of-domain feature space of the AI based system, the in-domain feature space corresponding to features of data that the AI based system is trained to classify and the out-of-domain feature space corresponding to features of data that the AI based system is not trained to classify;
   generating (106) probability distribution functions, in the in-domain feature space and the out-of-domain feature space, for the input data and for the data that the AI based system is trained to classify; and
   determining (108) whether the input data is out-of-domain of the AI based system based on the probability distribution functions for the input data and for the data that the AI based system is trained to classify.

2. The method of claim 1, wherein modelling an in-domain feature space of the AI based system and an out-of-domain feature space of the AI based system comprises:

   computing the in-domain feature space based on one or more in-domain linear projection matrices of the AI based system;
   computing one or more orthogonal linear projection matrices for the out-of-domain feature space based on the one or more in-domain linear projection matrices of the AI based system; and
   computing the out-of-domain feature space based on the one or more orthogonal linear projection matrices for the out-of-domain feature space.

3. The method of claim 1 or 2, wherein generating probability distribution functions, in the in-domain feature space and the out-of-domain feature space, for the input data and for the data that the AI based system is trained to classify comprises:
   generating the probability distribution functions using a Gaussian process model or a combination of Gaussian probability distribution models fitted to available data.

4. The method of any of claims 1 to 3, further comprising:
   in response to determining that the input data is out-of-domain of the AI based system, transmitting a notification to a user for reviewing a prediction generated by the AI based system from the input data.

5. The method of any of claims 1 to 4, further comprising:
   in response to determining that the input data is out-of-domain of the AI based system:

   annotating the input data; and
   training the AI based system based on the annotated input data.

6. The method of any of claims 1 to 5, further comprising:
   in response to determining that the input data is not out-of-domain of the AI based system, generating a prediction from the input data by the AI based system.

7. The method of any of claims 1 to 6, wherein the receiving, the modelling, the generating, and the determining are performed by a module combined with the AI based system and the module combined with the AI based system generates a prediction from the input data and the determination of whether the input data is out-of-domain of the AI based system.

8. The method of any of claims 1 to 7, further comprising:
   selecting one of a plurality of algorithms of the AI based system based on the determining.

9. The method of any of claims 1 to 8, wherein the AI based system is for medical imaging analysis.

10. An apparatus comprising:

means for receiving (102) input data for inputting into an AI (artificial intelligence) based system;
means for modelling (104) an in-domain feature space of the AI based system and an out-of-domain feature space of the AI based system, the in-domain feature space corresponding to features of data that the AI based system is trained to classify and the out-of-domain feature space corresponding to features of data that the AI based system is not trained to classify;
means for generating (106) probability distribution functions, in the in-domain feature space and the out-of-domain feature space, for the input data and for the data that the AI based system is trained to classify; and
means for determining (108) whether the input data is out-of-domain of the AI based system based on the probability distribution functions for the input data and for the data that the AI based system is trained to classify.

11. The apparatus of claim 10, wherein the means for modelling an in-domain feature space of the AI based system and an out-of-domain feature space of the AI based system comprises:

means for computing the in-domain feature space based on one or more in-domain linear projection matrices of the AI based system;
means for computing one or more orthogonal linear projection matrices for the out-of-domain feature space based on the one or more in-domain linear projection matrices of the AI based system; and
means for computing the out-of-domain feature space based on the one or more orthogonal linear projection matrices for the out-of-domain feature space.

12. The apparatus of claim 10 or 11, wherein the means for generating probability distribution functions, in the in-domain feature space and the out-of-domain feature space, for the input data and for the data that the AI based system is trained to classify comprises:
means for generating the probability distribution functions using a Gaussian process model or a combination of Gaussian probability distribution models fitted to available data.

13. The apparatus of any of claims 10 to 12, further comprising:
means for transmitting a notification to a user for reviewing a prediction generated by the AI based system from the input data in response to determining that the input data is out-of-domain of the AI based system.

14. The apparatus of any of claims 10 to 13, wherein the receiving, the modelling, the generating, and the determining are performed by a module combined with the AI based system and the module combined with the AI based system generates a prediction from the input data and the determination of whether the input data is out-of-domain of the AI based system.

15. A non-transitory computer readable medium storing computer program instructions, the computer program instructions when executed by a processor cause the processor to perform operations comprising:

receiving (102) input data for inputting into an AI (artificial intelligence) based system;
modelling (104) an in-domain feature space of the AI based system and an out-of-domain feature space of the AI based system, the in-domain feature space corresponding to features of data that the AI based system is trained to classify and the out-of-domain feature space corresponding to features of data that the AI based system is not trained to classify;
generating (106) probability distribution functions, in the in-domain feature space and the out-of-domain feature space, for the input data and for the data that the AI based system is trained to classify; and
determining (108) whether the input data is out-of-domain of the AI based system based on the probability distribution functions for the input data and for the data that the AI based system is trained to classify.

16. The non-transitory computer readable medium of claim 15, wherein modelling an in-domain feature space of the AI based system and an out-of-domain feature space of the AI based system comprises:

computing the in-domain feature space based on one or more in-domain linear projection matrices of the AI based system;
computing one or more orthogonal linear projection matrices for the out-of-domain feature space based on the one or more in-domain linear projection matrices of the AI based system; and
computing the out-of-domain feature space based on the one or more orthogonal linear projection matrices for the out-of-domain feature space.

17. The non-transitory computer readable medium of claim 15 or 16, the operations further comprising:
in response to determining that the input data is out-of-domain of the AI based system:

means for annotating the input data; and
means for training the AI based system based on the annotated input data.

18. The non-transitory computer readable medium of any of claims 15 to 17, the operations further comprising:
in response to determining that the input data is not out-of-domain of the AI based system, generating a prediction
from the input data by the AI based system.

19. The non-transitory computer readable medium of any of claims 15 to 18, the operations further comprising:
selecting one of a plurality of algorithms of the AI based system based on the determining.

20. The non-transitory computer readable medium of any of claims 15 to 19, wherein the AI based system is for medical
imaging analysis.

# FIG 1

100

| Receive input data for inputting into an AI based system | ~102 |

↓

| Model an in-domain feature space of the AI based system and an out-of-domain feature space of the AI based system, the in-domain feature space corresponding to features of data that the AI based system is trained to classify and the out-of-domain feature space corresponding to features of data that the AI based system is not trained to classify | ~104 |

↓

| Generate probability distribution functions, in the in-domain feature space and the out-of-domain feature space, for the input data and for the data that the AI based system is trained to classify | ~106 |

↓

| Determine whether the input data is out-of-domain of the AI based system based on the probability distribution functions for the input data and for the data that the AI based system is trained to classify | ~108 |

↓

| Output the determination of whether the input data is out-of-domain of the AI based system | ~110 |

FIG 2

FIG 3

# FIG 4

400

402

404

406

408

410

Input Data → Out-of-Domain Detector Module → Out-of-Domain? —No→ AI based System → Prediction

Yes

Notification

412

# FIG 5

500

502

504

506

508

510

Input Data → AI based System / Out-of-Domain Detector Module → Prediction

Out-of-Domain? —No→ Final Prediction

Yes

Notification

512

## FIG 6

```
                                              600

  602          604        606          608          610                  612

Input      ┌─────────┐           ┌──────────────┐        ◇              Final
Data   ──→ │ AI based │ ──→ Prediction ──→ │ Out-of-Domain │ ──→  ╱ Out-of- ╲  ─No→  Prediction
           │  System  │           │Detector Module│        ╲ Domain? ╱
           └─────────┘           └──────────────┘          ◇
    │                                     ↑                 │
    └─────────────────────────────────────┘               Yes
                                                            │
                                                            ↓
                                                      Notification ←── 614
```

## FIG 7

```
                                                    700

                       702         Unannotated      704            706
                                   Input Data

┌──────────────────┐      ┌──────────────┐      ┌──────────────┐
│  Train AI based   │      │               │      │               │
│  system and out-of-│ ──→ │ Select data for│ ──→ │ Annotate input │
│domain detector module│    │   annotation   │      │     data      │
└──────────────────┘      └──────────────┘      └──────────────┘
         ↑                                               │
         └───────────────────────────────────────────────┘
```

EP 4 160 483 A1

# FIG 8

FIG 9

900

912

914

918

920

916

902

904

906

906

908

910

EP 4 160 483 A1

FIG 10

1006          1002

Network
interface

1004

I/O    ◄─►    Processor    ◄─►    Storage

1008                            1012

Memory

1010

Image Acquisition
Device

1014

Europäisches
Patentamt

European
Patent Office

Office européen
des brevets

## EUROPEAN SEARCH REPORT

Application Number

EP 22 19 8037

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/310541 A1 (REISMAN JASON [US] ET AL) 1 October 2020 (2020-10-01) * abstract; figures 1,2,5 * * paragraphs [0037] – [0047], [0055] * ----- | 1-20 | INV. G06N3/0464 G06N3/09 G06F18/2433 G06V10/762 |
| X | US 2020/020098 A1 (ODRY BENJAMIN L [US] ET AL) 16 January 2020 (2020-01-16) * abstract; figures 7, 8a, 9-15 * * paragraphs [0002] – [0007], [0035] – [0037], [0069] – [0087] * ----- | 1-20 | G06V10/77 G06V10/778 G06V10/82 G06N7/01 G06N20/10 |

TECHNICAL FIELDS
SEARCHED      (IPC)

G06F
G06V
G06N

The present search report has been drawn up for all claims

| Place of search | Date of completion of the search | Examiner |
|---|---|---|
| The Hague | 20 January 2023 | Houtgast, Ernst |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................
& : member of the same patent family, corresponding
    document

EPO FORM 1503 03.82 (P04C01)

23

## ANNEX TO THE EUROPEAN SEARCH REPORT
## ON EUROPEAN PATENT APPLICATION NO.

EP 22 19 8037

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2023

| Patent document cited in search report | | Publication date | Patent family member(s) | | Publication date |
|---|---|---|---|---|---|
| US 2020310541 | A1 | 01-10-2020 | CN | 113646732 A | 12-11-2021 |
| | | | EP | 3921721 A1 | 15-12-2021 |
| | | | JP | 2022525829 A | 20-05-2022 |
| | | | US | 2020310541 A1 | 01-10-2020 |
| | | | WO | 2020205744 A1 | 08-10-2020 |
| US 2020020098 | A1 | 16-01-2020 | CN | 110506278 A | 26-11-2019 |
| | | | EP | 3612981 A1 | 26-02-2020 |
| | | | US | 2020020098 A1 | 16-01-2020 |
| | | | WO | 2018192672 A1 | 25-10-2018 |

EPO FORM P0459

For more details about this annex : see Official Journal of the European Patent Office, No. 12/82